(19) Europäisches Patentamt
European Patent Office
Office européen des brevets

(11) **EP 3 470 653 A1**

(12) **EUROPÄISCHE PATENTANMELDUNG**

(43) Veröffentlichungstag:
**17.04.2019   Patentblatt 2019/16**

(51) Int Cl.:
*F02D 41/00* (2006.01)          *F02D 41/12* (2006.01)
*F02D 41/14* (2006.01)          *F02D 41/22* (2006.01)
*F02B 77/08* (2006.01)          *G01M 15/04* (2006.01)

(21) Anmeldenummer: **18189644.0**

(22) Anmeldetag: **20.08.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **11.10.2017   DE 102017218149**

(71) Anmelder: **Robert Bosch GmbH
70442 Stuttgart (DE)**

(72) Erfinder:
• **Dzeko, Sani
60385 Frankfurt A. M. (DE)**
• **Zielke, Robert Manfred
71679 Asperg (DE)**
• **Stegmaier, Matthias
71706 Markgroeningen (DE)**
• **Mettal, Thomas
74321 Bietigheim-Bissingen (DE)**

(54) **VERFAHREN ZUM ERKENNEN VON KOMPRESSIONSVERLUSTEN VON ZYLINDERN EINER MEHRZYLINDRIGEN BRENNKRAFTMASCHINE**

(57)     Die Erfindung betrifft ein Verfahren zum Erkennen von Kompressionsverlusten von Zylindern (111, 112, 113, 114) einer mehrzylindrigen Brennkraftmaschine (100), wobei bei deaktivierter Einspritzung der Brennkraftmaschine (100) für jeden Zylinder (111, 112, 113, 114) der Brennkraftmaschine (100) jeweils Segmentzeiten bestimmt werden, in welcher eine Kurbelwelle (110) der Brennkraftmaschine (100) jeweils einen vorgegebenen Winkelbereich um einen oberen Totpunkt des jeweiligen Zylinders (111, 112, 113, 114) herum überstreicht, aus den Segmentzeiten für jeden Zylinder (111, 112, 113, 114) Laufunruhewerte bestimmt werden, aus den Laufunruhewerten für jeden Zylinder (111, 112, 113, 114) jeweils eine Bewertungsgröße bestimmt und anhand dieser Bewertungsgröße bewertet wird, ob ein Kompressionsverlust vorliegt.

**Fig. 1**

**Beschreibung**

Die vorliegende Erfindung betrifft ein Verfahren zum Erkennen von Kompressionsverlusten von Zylindern einer mehrzylindrigen Brennkraftmaschine sowie eine Recheneinheit und ein Computerprogramm zu dessen Durchführung.

Stand der Technik

Für eine exakte Steuerung einer Verbrennung in Zylindern einer Brennkraftmaschine sind neben der zugemessenen Kraftstoffmenge noch andere Parameter, wie insbesondere der Kompressionsdruck (Druck im Inneren eines Zylinders, der durch den Kolbenhub erzeugt werden kann) relevant. Störungen der Verbrennung, wie z.B. unrunder Motorlauf oder Leistungsverlust, können daher auch von Störungen in der Kompression herrühren.

Der sog. Kompressionstest ist eine Werkstattdiagnosefunktion, die Abweichungen der Kompression auf einzelnen Zylindern überprüfen kann. Er zeichnet die Zahnzeiten der Kurbelwelle auf, während der Verbrennungsmotor bei deaktivierter Einspritzung geschleppt wird. Über die zylinderindividuelle Auswertung der Zahnzeiten kann Kompressionsverlust, z.B. durch Leckage, zylindergenau erkannt werden. Kompressionsverlust zeigt sich dabei durch reduzierte Verzögerung sowie Beschleunigung der Kurbelwelle in der Kompressions- respektive Expansionsphase des defekten Zylinders. Der Zylinder hat hierbei die Funktion einer Gasfeder, die kinetische Energie aus der Rotation in potentielle Energie umwandelt und kurzzeitig im Gasdruck speichert. Insbesondere bei hohen Verdichtungsverhältnissen - d.h. hohen Gasfederkräften - von Dieselmotoren ist der Kompressionstest ein wichtiges Diagnosetool mit Pinpointing-Fähigkeit bei z.B. unrundem Motorlauf oder Leistungsverlust.

Ein mögliches Kriterium zur Erkennung von Kompressionsverlust ist die Abweichung der Zahnzeit eines Zylinders gegenüber den anderen Zylindern in einem bestimmten Zahnsegment. Ein mögliches Zahnsegment liegt beispielsweise im Bereich von 42°-60° Kurbelwellenwinkel (KW) nach OT (oberer Totpunkt) und hat eine Größe von 6° KW.

Ein typisches Einsatzszenario des Kompressionstests ist ein nichtstartender Verbrennungsmotor. In einem solchen Fall ist ein häufiger Ablauf, dass ein Werkstattmitarbeiter mehrfach versucht, den Motor zu starten, den Fehlerspeicher überprüft und schließlich den Kompressionstest anwendet. Mehrfache Startversuche erwärmen jedoch das Motoröl an der Zylinderwand, wodurch sich die Viskosität des Motoröls ändert und wiederum die Reibung verringert. Die Verringerung der Reibung sorgt für eine Erhöhung der Rotationsenergie, wodurch der Einfluss der Gasfeder auf die Rotation verringert wird. Dieser Temperatureffekt - auch "Warmorgeln" genannt - ist nicht über die Motor- bzw. Öltemperatur messbar und verschlechtert die Aussagekraft des Tests.
Es ist daher wünschenswert, eine Möglichkeit zur Verfügung zu haben, Kompressionsabweichungen auch im Fall niedriger Gasfederkräfte, d.h. z.B. bei Motoren mit geringer Verdichtung und/oder bei warmem Motor, erkennen zu können.

Offenbarung der Erfindung

Erfindungsgemäß werden ein Verfahren zum Erkennen von Kompressionsverlusten von Zylindern einer mehrzylindrigen Brennkraftmaschine sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.
Die Erfindung betrifft insbesondere einen sog. Kompressionstest, welcher die Abweichung der Kompression auf einzelnen Zylindern überprüfen kann. Durch das Verfahren können Kompressionsverluste, z.B. durch Leckage, zylindergenau erkannt werden. Insbesondere stellt die Erfindung somit ein Diagnosetool dar, um Kompressionsverluste einzelner Zylinder der Brennkraftmaschine erkennen zu können, auch wenn die Brennkraftmaschine nicht mehr gestartet und gefeuert werden kann.
Im Rahmen des Verfahrens werden bei deaktivierter Einspritzung (sowie zweckmäßigerweise auch deaktivierter Zündung) der Brennkraftmaschine für jeden Zylinder der Brennkraftmaschine jeweils Segmentzeiten bestimmt, in welcher eine Kurbelwelle der Brennkraftmaschine jeweils einen vorgegebenen Winkelbereich um einen oberen Totpunkt des jeweiligen Zylinders herum überstreicht. Als Segmentzeit sei in diesem Zusammenhang insbesondere eine Zeit zu verstehen, in der ein Zylinder einen Winkelbereich durchstreicht, in welcher der Zylinder als aktiv betrachtet wird. Als Totpunkt eines Zylinders sei in diesem Zusammenhang zu verstehen, dass sich ein Kolben, welcher mit der Kurbelwelle gekoppelt ist und sich in diesem Zylinder auf und ab bewegt, in einem oberen Totpunkt befindet. Als oberer Totpunkt im Rahmen der Erfindung eignet sich im Wesentlichen der obere Zünd-Totpunkt (ZOT), da in diesem Fall die Einlass- und Auslassventile in dem Winkelbereich geschlossen sind und somit der Zylinder als Gasfeder wirken kann.
Zweckmäßigerweise wird für jeden Zylinder jeweils eine Vielzahl von Segmentzeiten bestimmt. Die Kurbelwelle durchläuft dabei insbesondere mindestens einen, vorzugsweise mehrere Arbeitsspiele und die einzelnen Zylinder bzw. die sich darin bewegenden Kolben befinden sich jeweils ein- oder mehrmals in den jeweiligen oberen Totpunkten. Die Genauigkeit der Erkennung von Kompressionsverlusten hängt insbesondere von der Anzahl von bestimmten Segmentzeiten ab. Je mehr Messwerte (in Form der Segmentzeiten) bestimmt werden, desto genauer die Erkennung von Kompressionsverlusten.

Aus diesen bestimmten Segmentzeiten werden im Rahmen des Verfahrens für jeden Zylinder Laufunruhewerte bestimmt, insbesondere jeweils als Differenz zwischen Segmentzeiten verschiedener Zylinder. Bei Kompressionsverlust eines Zylinders unterscheiden sich die Segmentzeiten dieses fehlerbehafteten Zylinders von den Segmentzeiten der übrigen fehlerfreien Segmentzeiten. Segmentzeiten von fehlerfreien Zylindern sollten identisch oder zumindest im Wesentlichen identisch sein. Unterscheiden sich Segmentzeiten von Zylindern, deutet dies auf Kompressionsverluste hin, so dass Differenzen von Segmentzeiten verschiedener Zylinder zweckmäßigerweise als Maß für Laufunruhe und somit als Laufunruhewerte bestimmt werden. Insbesondere wird aus der Vielzahl von Segmentzeiten auch eine Vielzahl von Laufunruhewerten für jeden Zylinder bestimmt. Insbesondere kann somit für jeden Zylinder ein zeitlicher Verlauf der Laufunruhewerte für die Dauer des Zeitintervalls bestimmt werden.

Laufunruhewerte lassen sich beispielsweise als Differenzen der Segmentzeiten aufeinanderfolgender Zylinder, die zusätzlich mit einem Gewichtungsfaktor multipliziert werden, bestimmen. Der Gewichtungsfaktor hängt von den absoluten Segmentzeiten ab. Weiterhin können die Laufunruhewerte in Summentermen mit jeweils gleichem Vorzeichen aufsummiert werden. Dies wird zum Beispiel zur Erkennung von Bankaussetzern verwendet. Verfahren zum Bestimmen von Laufunruhewerten sind beispielsweise aus der DE 196 27 540 B4, DE 41 18 580 A1 und der DE 10 2008 044 305 A1 bekannt, auf die hinsichtlich näherer Details verwiesen wird. Insbesondere wird ein Laufunruhewert LUT(i) für einen Zündtakt i aus den Segmentzeiten ts gemäß folgender

Formel bestimmt: $LUT(i) = \dfrac{ts(i+1) - ts(i)}{ts(i)^3}$

Aus den Laufunruhewerten wird für jeden Zylinder eine Bewertungsgröße bestimmt. Anhand dieser Bewertungsgröße wird bewertet, ob ein Kompressionsverlust vorliegt. Diese Bewertungsgröße hängt somit zweckmäßigerweise von allen bestimmten Laufunruhewerten bzw. von dem zeitlichen Verlauf der Laufunruhewerte ab. Durch Berücksichtigung mehrerer Arbeitsspiele der Brennkraftmaschine kann somit zweckmäßigerweise eine Aussagekraft der Bewertungsgröße erhöht werden.

Die Erfindung stellt eine Möglichkeit bereit, um Kompressionsverluste einzelner Zylinder präzise erkennen zu können, insbesondere auch bei Brennkraftmaschinen mit geringen Verdichtungsverhältnissen, insbesondere durch geeignete Wahl des vorgegebenen Winkelbereichs , wie nachfolgend erläutert wird.

Der vorgegebene Winkelbereich erstreckt sich insbesondere symmetrisch um den jeweiligen oberen Totpunkt herum und beschreibt insbesondere ein aktives Segment des entsprechenden Zylinders, in welchem die Einflüsse der anderen Zylinder insbesondere gering sind. Innerhalb dieses Winkelbereichs wird somit zweckmäßigerweise sowohl eine Kompressionsphase des Zylinders berücksichtigt, in welcher sich der Kolben des Zylinders zu dem oberen Totpunkt hin bewegt, als auch eine Expansionsphase, in welcher sich der Kolben wieder von dem oberen Totpunkt weg bewegt. Diese beiden Phasen werden insbesondere gleichwertig betrachtet, so dass sich Reibungseinflüsse in diesen beiden Phasen aufheben.

Durch deaktivierte Einspritzung fungieren die einzelnen Zylinder zweckmäßigerweise als Gasfeder, welche jeweils kinetische Energie der Rotation der Kurbelwelle in potentielle Energie umwandeln und zumindest kurzzeitig in Gasdruck des im Zylinder komprimierten Gases speichern. Die Brennkraftmaschine wird dazu geschleppt, z.B. von einem Starter. Zu Beginn sind die Drehzahlen der Brennkraftmaschine bzw. der Kurbelwelle und des Starters insbesondere identisch oder zumindest im Wesentlichen identisch. Bewegt sich ein Kolben in einem Zylinder während der Kompressionsphase auf seinen oberen Totpunkt zu, verringert sich die Drehzahl der Kurbelwelle durch die Gasfeder, insbesondere aufgrund der Kompression des Gases im Zylinder. Nachdem der Kolben den oberen Totpunkt passiert hat und sich während der Expansionsphase von diesem weg bewegt, erhöht sich die Drehzahl der Kurbelwelle durch die Gasfeder, insbesondere aufgrund des im komprimierten Gas gespeicherten Gasdrucks.

Bei einem Kompressionsverlust eines fehlerhaften Zylinders verringern sich diese beschleunigenden und verzögernden Wirkungen der Gasfeder. In der Kompressionsphase des fehlerhaften Zylinders wird die Drehzahl weniger stark verringert als bei fehlerfreien Zylindern und in der Expansionsphase des fehlerbehafteten Zylinders wird die Drehzahl weniger stark erhöht als bei fehlerfreien Zylindern. Der fehlerbehaftete Zylinder verliert durch den Kompressionsverlust einen Teil der potentiellen Energie der Gasfeder, was in einer längeren Zeitdauer zum Durchlaufen des vorgegebenen Winkelbereichs um den oberen Totpunkt und somit zu einer größeren Segmentzeit führt.

Durch Berücksichtigung einer Vielzahl von Arbeitsspielen bzw. einer Vielzahl von Segmentzeiten und Laufunruhewerten kann insbesondere eine Trennschärfe des Verfahrens erhöht werden. Als derartige Trennschärfe wird insbesondere eine Unterscheidungsfähigkeit zwischen fehlerfreier Kompression (Gutkompression) und fehlerbehafteter Kompression (Schlechtkompression) bezeichnet. Beispielsweise können durch das Verfahren Kompressionsdruckunterschiede zwischen Gut- und Schlechtkompression von lediglich 3 bar erkannt werden.

Das Verfahren ist insbesondere für verschiedene Arten von Brennkraftmaschinen geeignet und ermöglicht gleichermaßen präzises Erkennen von Kompressionsverlusten mit hoher Trennschärfe bei Brennkraftmaschinen verschiedener Verdichtungsverhältnisse. Als Verdichtungsverhältnis ε ist dabei insbesondere ein Verhältnis des gesamten Zylinderraumes vor der Verdichtung (Gesamtvolumen) zum verbliebenen Raum nach der Verdichtung (Restvolumen) bezeichnet. Beispielsweise eignet sich das Verfahren für Dieselmotoren mit vergleichsweise hohen Verdichtungsverhältnissen, bei welchen hohe Gasfederkräfte auftreten und bei welchen sich Veränderungen bei Kompressionsverlusten vergleichsweise deutlich zeigen. Gleichermaßen eignet sich das Verfahren für Benzin- bzw. Ottomotoren mit vergleichsweise geringen Verdichtungsverhältnissen, beispielsweise ε = 10 oder mehr. Insbesondere können auch bei derartigen Brennkraftmaschinen Veränderungen bei Kompressionsverlusten präzise erkannt werden, welche im Vergleich zu Dieselmotoren deutlich geringer ausfallen.

Durch geeignete Wahl des vorgegebenen Winkelbereichs ergibt sich zweckmäßigerweise eine Temperaturrobustheit des Verfahrens; Kompressionsverluste können somit insbesondere unabhängig von der aktuellen Temperatur der Brennkraftmaschine bzw. von einer Öltemperatur erkannt werden. Bei erwärmtem Öl an den Zylinderwänden ändert sich insbesondere die Viskosität des Öls und die Reibung verringert sich. Eine Verringerung der Reibung führt zu einer Erhöhung der Rotationsenergie, wodurch der Einfluss der Gasfeder auf die Kurbelwellenrotation verringert wird. Da durch den symmetrisch um den oberen Totpunkt herum vorgegebenen Winkelbereich die Kompressions- und Expansionsphase gleichwertig betrachtet werden, heben sich diese Reibungseinflüsse zweckmäßigerweise auf.

Vorteilhafterweise werden die Segmentzeiten für jeden Zylinder der Brennkraftmaschine jeweils für die Dauer eines vorgegebenen Zeitintervalls und/oder für eine vorgegebene Anzahl von Arbeitsspielen bestimmt. Während dieses Zeitintervalls durchläuft die Kurbelwelle einen oder vorzugsweise mehrere Arbeitsspiele, die einzelnen Zylinder bzw. die sich darin bewegenden Kolben befinden sich jeweils ein- oder mehrmals in den jeweiligen oberen Totpunkten. Dieses Zeitintervall bzw. die vorgegebene Anzahl von Arbeitsspielen stellt insbesondere eine Auswertedauer bzw. Messdauer dar, von welcher die Genauigkeit der Erkennung von Kompressionsverlusten abhängt. Je länger das Zeitintervall bzw. je mehr Arbeitsspiele, desto mehr desto mehr Messwerte (in Form der Segmentzeiten) und desto genauer die Erkennung von Kompressionsverlusten. Durch geeignete Wahl des vorgegebenen Zeitintervalls bzw. der vorgegebenen Anzahl von Arbeitsspielen ergibt sich zweckmäßigerweise eine hohe Trennschärfe des Verfahrens. Beispielsweise kann das Zeitintervall zwischen 5 s und 10 s gewählt werden.

Gemäß einer bevorzugten Ausführungsform wird für jeden Zylinder als Bewertungsgröße eine Summe der Laufunruhewerte und/oder ein zeitliches Integral der Laufunruhewerte für diesen Zylinder bestimmt wird. Durch derartiges Aufsummieren der Vielzahl von Laufunruhewerten ergibt sich insbesondere eine robuste Bewertungsgröße mit hoher Aussagekraft, durch welche präzise auf Kompressionsverluste rückgeschlossen werden kann und eine hohe Trennschärfe erreicht werden kann.

Besonders bevorzugt wird für jeden Zylinder als Bewertungsgröße eine Summe positiver Laufunruhewerte und/oder ein zeitliches Integral positiver Laufunruhewerte für diesen Zylinder bestimmt. Positive Laufunruhewerte signalisieren insbesondere eine Verlängerung der Segmentzeit von einem Zylinder zum Nachfolgenden. Dies bedeutet insbesondere, dass Rotationsenergie verloren geht. Durch zylinderzugeordnete Aufsummierung der positiven Laufunruhewerte erhält man insbesondere eine Bewertungsgröße, die auf Kompressionsverluste hindeutet.

Vorteilhafterweise wird für jeden Zylinder als Bewertungsgröße eine Steigung der Laufunruhewerte für diesen Zylinder bestimmt, insbesondere während des vorgegebenen Zeitintervalls. Besonders bevorzugt wird für jeden Zylinder als Bewertungsgröße eine Steigung positiver Laufunruhewerte für diesen Zylinder bestimmt. Beispielsweise kann ein Verhältnis der aufsummierten insbesondere positiven Laufunruhewerte und der Dauer des Zeitintervalls oder ein Verhältnis der aufsummierten insbesondere positiven Laufunruhewerte und der Anzahl der durchlaufenen Arbeitsspiele als Steigung bestimmt werden.

Gemäß einer bevorzugten Ausführungsform kann für jeden Zylinder als Bewertungsgröße auch eine Summe der Segmentzeiten des jeweiligen Zylinders und/oder ein Verhältnis von Segmentzeiten und/oder ein Verhältnis einer Summe der Segmentzeiten des jeweiligen Zylinders zu einer Summe der Segmentzeiten aller Zylinder bestimmt werden.

Gemäß einer bevorzugten Ausführungsform wird als Laufunruhewert für einen Zylinder eine Differenz zwischen einer ersten Segmentzeit, in welcher die Kurbelwelle den vorgegebenen Winkelbereich um den oberen Totpunkt dieses Zylinders herum überstreicht, und einer zweiten Segmentzeit, in welcher die Kurbelwelle den vorgegebenen Winkelbereich um den oberen Totpunkt eines anderen der Zylinder herum überstreicht, insbesondere desjenigen Zylinders, der sich unmittelbar zuvor in seinem oberen Totpunkt befand, bestimmt. Positive Laufunruhewerte signalisieren somit insbesondere eine Verlängerung der Segmentzeit von einem Zylinder zum nächsten. Dies deutet darauf hin, dass Rotationsenergie verloren geht und dass ein Kompressionsverlust des Zylinders vorliegt.

Vorzugsweise wird ein Schwellwertvergleich der Bewertungsgröße durchgeführt wird, um zu bewerten, ob ein Kompressionsverlust vorliegt. Erreicht bzw. überschreitet die Bewertungsgröße den Schwellwert, deutet dies insbesondere auf einen Kompressionsverlust hin.

Vorteilhafterweise wird als der Winkelbereich ein Verhältnis eines Winkelbereichs eines Arbeitsspiels der Brennkraftmaschine und einer Anzahl der Zylinder vorgegeben. Beispielsweise beträgt der Winkelbereich eines Arbeitsspiels bei einem Viertaktmotor 720°KW. Der Kolben jedes Zylinders befindet sich dabei während eines vollständigen Arbeitsspiels zweimal in dem oberen Totpunkt. Für einen vierzylindrigen Viertaktmotor ergibt sich somit ein vorgegebenes Winkelintervall von 180°KW. Das vorgegebene Winkelintervall erstreckt sich somit beispielsweise von 90°KW vor dem oberen Totpunkt bis 90°KW nach dem oberen Totpunkt.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen

Figur 1 zeigt schematisch eine Brennkraftmaschine, welche zur Ausführung einer bevorzugten Ausführungsform eines erfindungsgemäßen Verfahrens ausgebildet ist.

Figur 2 zeigt schematisch eine bevorzugte Ausführungsform eines erfindungsgemäßen Verfahrens als ein Blockidagramm.

Figur 3 zeigt schematisch Diagramme einer Kurbelwellendrehzahl in Abhängigkeit von einem Kurbelwellenwinkel, welche im Zuge einer bevorzugten Ausführungsform eines erfindungsgemäßen Verfahrens bestimmt werden können.

Figur 4 zeigt schematisch Diagramme von Integralen von zeitlichen Verläufen von Laufunruhewerten, welche im Zuge einer bevorzugten Ausführungsform eines erfindungsgemäßen Verfahrens bestimmt werden können.

Ausführungsform(en) der Erfindung

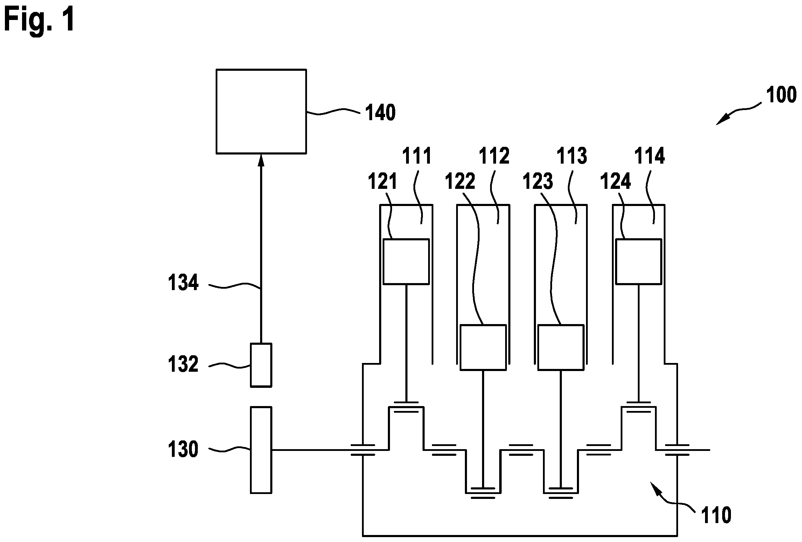

In Figur 1 ist schematisch eine Brennkraftmaschine dargestellt und mit 100 bezeichnet, welche als ein vierzylindriger Viertaktmotor ausgebildet ist.

Der Verbrennungsmotor 100 weist vier Zylindern 111, 112, 113, 114 auf, die von jeweils einem Kolben 121, 122, 123, 124 beweglich abgedichtet werden. Die auf die Kolben 121, 122, 123, 124 wirkenden Gaskräfte werden auf eine Kurbelwelle 110 übertragen.

Ein Geberrad 130 ist drehfest mit der Kurbelwelle 110 verbunden. Entlang des Umfangs des Geberrades 130 sind Markierungen angeordnet, insbesondere äquidistant. Diese Markierungen können mittels eines Aufnehmers 132, beispielsweise eines magnetischen Sensors, abgetastet und ein Messsignal 134, beispielsweise eine elektrisches Spannungssignal, kann von einem Steuergerät 140 bestimmt werden.

Aus diesem Messsignal 134 können von dem Steuergerät 140 Zeitpunkte als sog. Zahnzeiten bestimmt werden, zu welchen eine Markierung den Aufnehmer 132 passiert. Segmentzeiten können als zeitliche Abstände zwischen jeweils zwei bestimmten Markierungen des Geberrads 132 bestimmt werden. Aus dem Messsignal 134 ist insbesondere bekannt, in welcher Stellung (bezogen auf eine Umdrehung der Kurbelwelle 110 von 0° bis 360°) sich die Kolben 121, 122, 123, 124 der einzelnen Zylinder 111, 112, 113, 114 befinden. Insbesondere kann bestimmt werden, wann sich die Kolben 121, 122, 123, 124 der einzelnen Zylinder 111, 112, 113, 114 jeweils in einem (oberen bzw. unteren) Totpunkt befinden.

Es versteht sich, dass der Verbrennungsmotor 100 noch weitere Elemente aufweisen kann, z.B. eine oder mehre Nockenwellen, Einlass- und Auslassventile usw., welche der Übersichtlichkeit halber in Figur 1 nicht dargestellt sind.

Bei Zündaussetzern bzw. Kompressionsverlusten in einem oder mehreren der Zylinder 111, 112, 113, 114 verringern sich die wirkenden Gaskräfte und damit auch die Gleichförmigkeit der Drehbewegung der Kurbelwelle 110 oder es kann gar dazu kommen, dass der Verbrennungsmotor 100 nicht mehr gestartet werden kann.

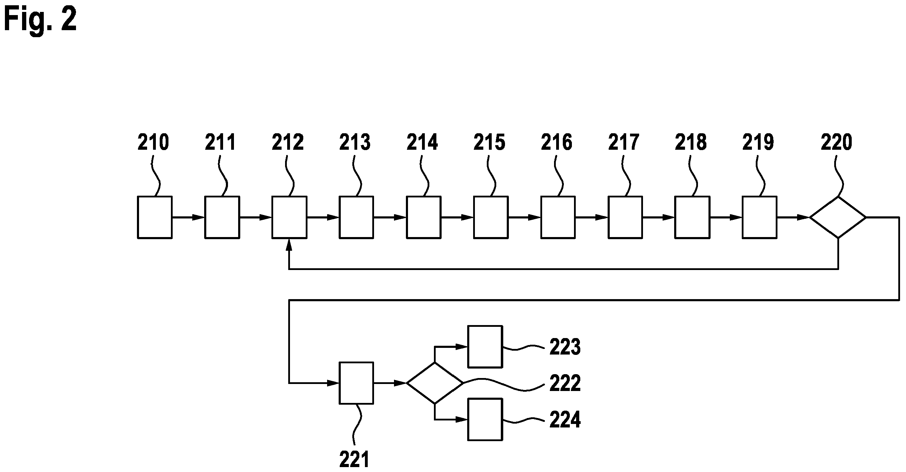

Zum Erkennen von Kompressionsverlusten ist das Steuergerät 140, insbesondere programmtechnisch, dazu eingerichtet, eine bevorzugte Ausführungsform eines erfindungsgemäßen Verfahrens durchzuführen, welches in Figur 2 als ein Blockidagramm dargestellt ist und nachfolgend erläutert wird.

In einem Schritt 210 wird der Verbrennungsmotor 100 bei deaktivierter Einspritzung geschleppt, beispielsweise mittels eines Starters oder mittels einer elektrischen Maschine z.B. in Hybridfahrzeugen. Beispielsweise wird der Verbrennungsmotor 100 für die Dauer eines vorgegebenen Zeitintervalls Δt von z.B. 5 s geschleppt.

Während dieses Zeitintervalls von 5 s führt die Kurbelwelle n Arbeitsspiele (d.h. 2n komplette Umdrehungen) aus. Somit befindet sich jeder der Zylinder 111, 112, 113, 114 bzw. jeder der Kolben 121, 122, 123, 124 während des Zeitintervalls n Mal in seinem oberen Zünd-Totpunkt (ZOT).

Für jeden Zylinder 111, 112, 113, 114 werden während dieses Zeitintervalls jeweils Segmentzeiten bestimmt, in welcher die Kurbelwelle 110 jeweils einen vorgegebenen Winkelbereich $\Delta\varphi$ um den oberen Zünd-Totpunkt des jeweiligen Zylinders 111, 112, 113, 114 herum überstreicht.

Dieser vorgegebene Winkelbereich $\Delta\varphi$ wird als Verhältnis eines Winkelbereichs eines Arbeitsspiels von 720°KW und einer Anzahl der Zylinder vorgegeben:

$$\Delta\varphi = \frac{720°KW}{4} = 180°KW$$

Der vorgegebene Winkelbereich $\Delta\varphi$ liegt jeweils symmetrisch um den oberen Zünd-Totpunkt herum und erstreckt sich somit von 90°KW vor dem oberen Zünd-Totpunkt bis 90°KW nach dem oberen Zünd-Totpunkt.

In einem Schritt 211 wird beispielsweise für den ersten Zylinder 111 eine erste Segmentzeit bestimmt, während welcher die Kurbelwelle 110 den vorgegebenen Winkelbereich um den oberen Zünd-Totpunkt dieses ersten Zylinders 111 überstreicht.

Nachdem der erste Zylinder 111 bzw. dessen Kolben 121 seinen oberen Zünd-Totpunkt durchlaufen hat, durchläuft beispielsweise der Kolben 122 des zweiten Zylinders 112 seinen oberen Zünd-Totpunkt. In einem Schritt 212 wird daher für den zweiten Zylinder 112 eine zweite Segmentzeit bestimmt, während welcher die Kurbelwelle 110 den vorgegebenen Winkelbereich um den oberen Zünd-Totpunkt dieses zweiten Zylinders 112 überstreicht.

In einem Schritt 213 wird für den zweiten Zylinder 112 ein erster Laufunruhewert bestimmt, als Differenz zwischen der in Schritt 212 bestimmten zweiten Segmentzeit des zweiten Zylinders 112 und der in Schritt 211 bestimmten ersten Segmentzeit des ersten Zylinders 111.

Bei einem fehlerfreien Zylinder ohne Kompressionsverlust wird während der Kompressionsphase Gas in dem Zylinder durch den sich zum oberen Zünd-Totpunkt hin bewegenden Kolben verdichtet, wodurch die Drehzahl der Kurbelwelle verringert wird. In der anschließenden Expansionsphase wird durch das komprimierte Gas die Drehzahl der Kurbelwelle erhöht. Bei Kompressionsverlust eines fehlerbehafteten Zylinders verringern sich diese beschleunigenden und verzögernden Wirkungen hingegen, wodurch sich die entsprechende Segmentzeit vergrößert.

Wenn die Zylinder 111 und 112 jeweils fehlerfrei sind und keine Kompressionsverluste besitzen, sollten ihre in den Schritten 211 und 212 bestimmten Segmentzeiten identisch oder zumindest im Wesentlichen identisch sein. Wenn hingegen ein Kompressionsverlust des ersten Zylinders 111 vorliegt, ist dessen in Schritt 211 bestimmte erste Segmentzeit größer als die in Schritt 212 bestimmte zweite Segmentzeit des zweiten Zylinders 112.

Auf analoge Weise durchläuft nach dem zweiten Zylinder 112 der dritte Zylinder 113 bzw. dessen Kolben 123 seinen oberen Zünd-Totpunkt. In Schritt 214 wird daher für den dritten Zylinder 113 eine dritte Segmentzeit bestimmt, während welcher die Kurbelwelle 110 den vorgegebenen Winkelbereich um den oberen Zünd-Totpunkt des dritten Zylinders 113 überstreicht.

Analog zu Schritt 213 wird in Schritt 215 für den dritten Zylinder 113 ein Laufunruhewert bestimmt, als Differenz zwischen der in Schritt 214 bestimmten dritten Segmentzeit des dritten Zylinders 113 und der in Schritt 212 bestimmten zweiten Segmentzeit des zweiten Zylinders 112.

Nach dem dritten Zylinder 113 durchläuft der vierte Zylinder 114 bzw. dessen Kolben 124 seinen oberen Zünd-Totpunkt. In Schritt 216 wird daher für den vierten Zylinder 114 eine vierte Segmentzeit bestimmt, während welcher die Kurbelwelle 110 den vorgegebenen Winkelbereich um den oberen Zünd-Totpunkt des vierten Zylinders 114 überstreicht.

In Schritt 217 wird für den vierten Zylinder 114 ein erster Laufunruhewert bestimmt, als Differenz zwischen der in Schritt 216 bestimmten vierten Segmentzeit des vierten Zylinders 114 und der in Schritt 214 bestimmten dritten Segmentzeit des dritten Zylinders 113.

Nach dem vierten Zylinder 114 durchläuft erneut der erste Zylinder 111 seinen oberen Totpunkt. In Schritt 218 wird daher analog zu Schritt 211 für den ersten Zylinder 111 erneut eine Segmentzeit bestimmt, während welcher die Kurbelwelle 110 den vorgegebenen Winkelbereich um den oberen Zünd-Totpunkt des ersten Zylinders 111 überstreicht.

In Schritt 219 wird für den ersten Zylinder 111 ein erster Laufunruhewert bestimmt, als Differenz zwischen der in Schritt 218 bestimmten Segmentzeit des ersten Zylinders 111 und der in Schritt 216 bestimmten vierten Segmentzeit des vierten Zylinders 114.

Die Schritte 212 bis 219 werden daraufhin solange widerholt, bis das Zeitintervall $\Delta t$ von 5 s in Schritt 220 durchlaufen wurde. Insbesondere werden für jeden der Zylinder 111, 112, 113, 114 somit n Segmentzeiten und n Laufunruhewerte bestimmt.

Nach Ablauf des Zeitintervalls $\Delta t$ werden die n Laufunruhewerte für jeden der Zylinder 111, 112, 113, 114 ausgewertet. Dabei wird in Schritt 221 für jeden Zylinder 111, 112, 113, 114 aus den jeweiligen n Laufunruhewerten eine Bewertungsgröße bestimmt. Beispielsweise können die n Laufunruhewerte dabei jeweils aufsummiert werden bzw. es kann jeweils ein Integral des zeitlichen Verlaufs der Laufunruhewerte bestimmt werden. In einer bevorzugten Ausgestaltung wird die Bewertungsgröße durch Aufsummierung nur der positiven Laufunruhewerte bestimmt.

Die Bewertungsgröße jedes Zylinders 111, 112, 113, 114 wird in Schritt 222 mit einem Schwellwert verglichen. Wenn keiner der Bewertungsgrößen den jeweiligen Schwellwert erreicht, wird in Schritt 223 bewertet, dass kein Kompressionsverlust vorliegt.

Erreicht bzw. überschreitet jedoch die Bewertungsgröße eines Zylinders den Schwellwert, wird in Schritt 224 bewertet, dass ein Kompressionsverlust dieses Zylinders vorliegt. In diesem Fall kann in Schritt 224 insbesondere eine Maßnahme durchgeführt werden, um den erkannten Kompressionsverlust zu beheben.

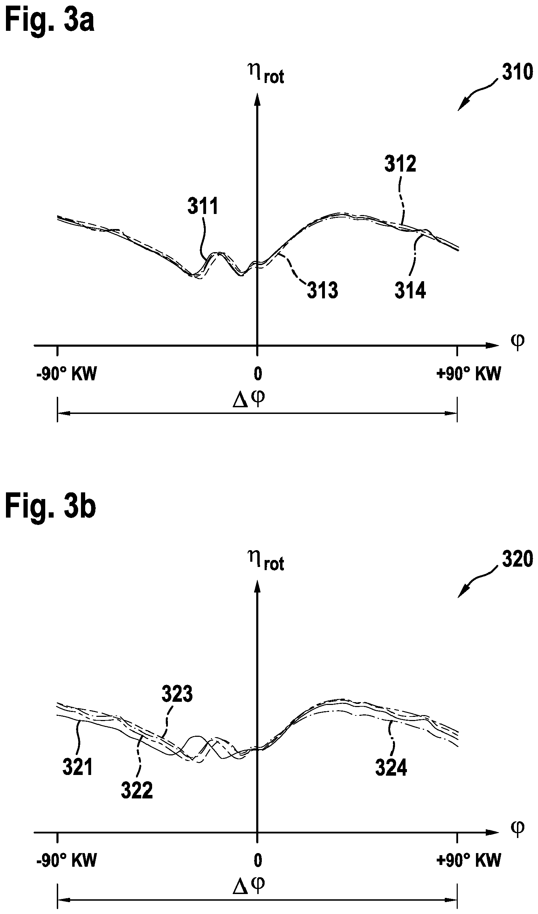

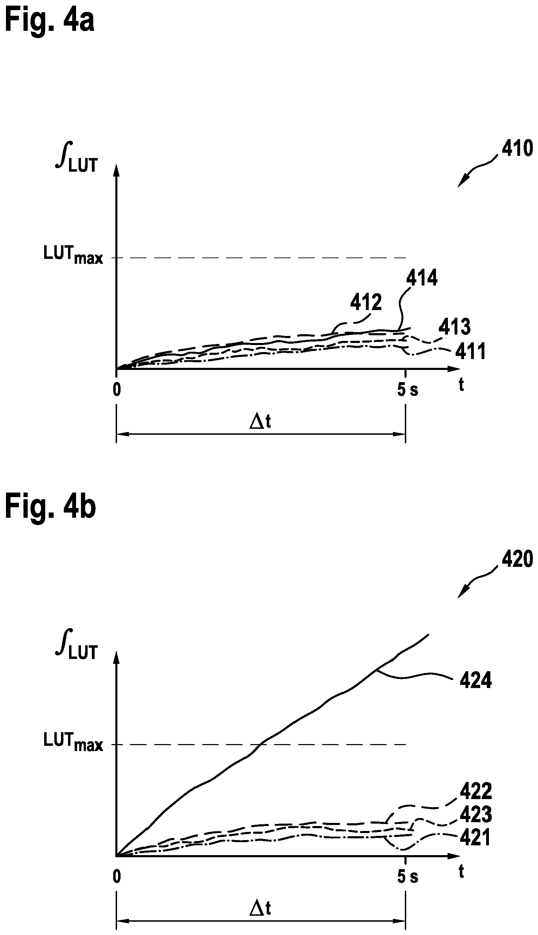

In den Figuren 3 und 4 sind jeweils schematisch Diagramme dargestellt, welche im Rahmen einer bevorzugten Ausführungsform des erfindungsgemäßen Verfahrens bestimmt werden können.

Figur 3 zeigt in Abbildungen a und b schematisch Diagramme 310, 320 einer Kurbelwellendrehzahl $n_{rot}$ der vierzylindrigen Brennkraftmaschine 100 aus Figur 1 in Abhängigkeit von einem Kurbelwellenwinkel $\varphi$.

Figur 3a zeigt schematisch ein Diagramm 310 für den fehlerfreien Fall ohne Kompressionsverluste. Die Kurven 311, 312, 313 und 314 zeigen dabei jeweils die Drehzahl der Kurbelwelle 110 in dem vorgegebene Winkelbereich $\Delta\varphi$ von 90°KW vor dem oberen Zünd-Totpunkt ($\varphi$=-90°KW) bis 90°KW nach dem oberen Totpunkt ($\varphi$=+90°KW) des jeweiligen Zylinders 111, 112, 113 bzw. 114. Wie in Figur 3a zu erkennen ist, sind die Kurven 311, 312, 313 und 314 für die Zylinder 111, 112, 113 bzw. 114 dabei im Wesentlichen identisch.

Analog zeigt Figur 3b schematisch ein Diagramm 320 für die vierzylindrige Brennkraftmaschine 100 aus Figur 1, wobei bei Zylinder 114 Kompressionsverluste auftreten. Kurve 324 zeigt dabei den Drehzahlverlauf dieses fehlerbehafteten Zylinders 114 in dem vorgegebenen Winkelbereich $\Delta\varphi$ von 180°KW um seinen oberen Totpunkt herum. Die Kurven 321, 322 bzw. 323 zeigen die Drehzahlverläufe der übrigen fehlerfreien Zylinder 111, 112 bzw. 113. Die Kurve 324 des fehlerbehafteten Zylinders 114 unterscheidet sich insbesondere in der Expansionsphase zwischen 0°KW und +90°KW von den Kurven 321, 322, 323 der fehlerfreien Zylinder, da der fehlerbehaftete Zylinder 114 in dieser Expansionsphase insbesondere eine geringere Beschleunigung besitzt als die fehlerfreien Zylinder 111, 112, 113.

Figur 4 zeigt in Abbildungen a und b schematisch Diagramme 410, 420 von Integralen der zeitlichen Verläufe der positiven Laufunruhewerte ($\hat{I}$LUT) während des vorgegebene Zeitintervalls $\Delta t$ von 5 s.

Das Integral $\int_{t=0s}^{t=5s} \text{LUT(t)dt}$, also eine Aufsummierung von allen im vorgegebenen Zeitintervall $\Delta t$ bestimmten positiven Laufunruhewerten eines Zylinders, kann beispielsweise als jeweilige Bewertungsgröße des Zylinders bestimmt werden.

In Figur 4a sind in Diagramm 410 schematisch Integralverläufe 411, 412, 413, 414 der Laufunruhewerte LUT für die Zylinder 111, 112, 113, 114 im fehlerfreien Fall ohne Kompressionsverluste schematisch dargestellt. Wie zu erkennen ist, liegt die Bewertungsgröße im fehlerfreien Fall von Figur 4b stets unterhalb des Schwellwerts $\text{LUT}_{max}$.

In Figur 4b sind analog schematisch Integralverläufe 421, 422, 423, 424 der Laufunruhewerte LUT für die Zylinder 111, 112, 113, 114 dargestellt, wobei bei Zylinder 114 Kompressionsverluste auftauchen. Wie zu erkennen ist, überschreitet der zu Zylinder 114 zugehörige Integralverlauf 424 den Schwellwert $\text{LUT}_{max}$, so dass auch die Bewertungsgröße dieses Zylinders 114 diesen Schwellwert $\text{LUT}_{max}$ überschreitet.

**Patentansprüche**

1. Verfahren zum Erkennen von Kompressionsverlusten von Zylindern (111, 112, 113, 114) einer mehrzylindrigen Brennkraftmaschine (100), wobei bei deaktivierter Einspritzung der Brennkraftmaschine (100)

   für jeden Zylinder (111, 112, 113, 114) der Brennkraftmaschine (100) jeweils Segmentzeiten bestimmt werden (211, 212, 214, 216, 218), in welcher eine Kurbelwelle (110) der Brennkraftmaschine (100) jeweils einen vorgegebenen Winkelbereich ($\Delta\varphi$) um einen oberen Totpunkt des jeweiligen Zylinders (111, 112, 113, 114) herum überstreicht,
   aus den Segmentzeiten für jeden Zylinder (111, 112, 113, 114) Laufunruhewerte bestimmt werden (213, 215, 217, 219),
   aus den Laufunruhewerten für jeden Zylinder (111, 112, 113, 114) jeweils eine Bewertungsgröße bestimmt (221) und anhand dieser Bewertungsgröße bewertet wird (222), ob ein Kompressionsverlust vorliegt.

2. Verfahren nach Anspruch 1, wobei die Segmentzeiten für jeden Zylinder (111, 112, 113, 114) der Brennkraftmaschine (100) jeweils für die Dauer eines vorgegebenen Zeitintervalls ($\Delta t$) und/oder für eine vorgegebene Anzahl von Arbeitsspielen bestimmt werden.

3. Verfahren nach Anspruch 1 oder 2, wobei für jeden Zylinder (111, 112, 113, 114) als Bewertungsgröße eine Summe und/oder ein zeitliches Integral der der Laufunruhewerte oder nur der positiven Laufunruhewerte bestimmt wird (221).

4. Verfahren nach einem der vorstehenden Ansprüche, wobei für jeden Zylinder (111, 112, 113, 114) als Bewertungsgröße eine Steigung der Laufunruhewerte oder nur der positiven Laufunruhewerte bestimmt wird.

**5.** Verfahren nach einem der vorstehenden Ansprüche, wobei für jeden Zylinder (111, 112, 113, 114) als Bewertungsgröße eine Summe der Segmentzeiten des jeweiligen Zylinders und/oder ein Verhältnis von Segmentzeiten und/oder ein Verhältnis einer Summe der Segmentzeiten des jeweiligen Zylinders zu einer Summe der Segmentzeiten aller Zylinder bestimmt wird.

**6.** Verfahren nach einem der vorstehenden Ansprüche, wobei als Laufunruhewert für einen Zylinder (111) jeweils eine Differenz zwischen einer ersten Segmentzeit, in welcher die Kurbelwelle (110) den vorgegebenen Winkelbereich ($\Delta\varphi$) um den oberen Totpunkt dieses Zylinders (111) herum überstreicht, und einer zweiten Segmentzeit, in welcher die Kurbelwelle (110) den vorgegebenen Winkelbereich ($\Delta\varphi$) um den oberen Totpunkt eines anderen der Zylinder (112) herum überstreicht (213), bestimmt wird.

**7.** Verfahren nach Anspruch 6, wobei der andere der Zylinder ein Zylinder ist, der sich unmittelbar zuvor in seinem oberen Totpunkt befand.

**8.** Verfahren nach einem der vorstehenden Ansprüche, wobei ein Schwellwertvergleich der Bewertungsgröße durchgeführt wird (222), um zu bewerten, ob ein Kompressionsverlust vorliegt.

**9.** Verfahren nach einem der vorstehenden Ansprüche, wobei als der Winkelbereich ($\Delta\varphi$) ein Verhältnis eines Winkelbereichs eines Arbeitsspiels der Brennkraftmaschine (100) und einer Anzahl der Zylinder (111, 112, 113, 114) vorgegeben wird.

**10.** Verfahren nach einem der vorstehenden Ansprüche, wobei der obere Totpunkt der obere Zünd-Totpunkt ist.

**11.** Recheneinheit (140), die dazu eingerichtet ist, ein Verfahren nach einem der vorstehenden Ansprüche durchzuführen.

**12.** Computerprogramm, das eine Recheneinheit (140) dazu veranlasst, ein Verfahren nach einem der Ansprüche 1 bis 10 durchzuführen, wenn es auf der Recheneinheit (140) ausgeführt wird.

**13.** Maschinenlesbares Speichermedium mit einem darauf gespeicherten Computerprogramm nach Anspruch 12.

# Fig. 1

# Fig. 2

EP 3 470 653 A1

## Fig. 3a

## Fig. 3b

# Fig. 4a

# Fig. 4b

**Europäisches Patentamt**
**European Patent Office**
**Office européen des brevets**

# EUROPÄISCHER RECHERCHENBERICHT

**Nummer der Anmeldung**

EP 18 18 9644

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 690 271 A1 (HONDA MOTOR CO LTD [JP]) 29. Januar 2014 (2014-01-29) * Zusammenfassung; Abbildungen 8,9,16-23 * * Absatz [0007] - Absatz [0008] * * Absatz [0079] - Absatz [0087] * * Absatz [0098] - Absatz [0106] * ----- | 1-5,8, 11-13 | INV. F02D41/00 F02D41/12 F02D41/14 F02D41/22 F02B77/08 G01M15/04 |
| X | DE 10 2008 006569 A1 (BOSCH GMBH ROBERT [DE]) 30. Juli 2009 (2009-07-30) * Zusammenfassung; Ansprüche 1,9,10; Abbildungen 2a,2b * * Absatz [0002] - Absatz [0003] * * Absatz [0012] - Absatz [0019] * * Absatz [0027] - Absatz [0028] * * Absatz [0031] - Absatz [0034] * ----- | 1,3-7, 9-13 | |
| X | DE 10 2015 109171 A1 (TOYOTA MOTOR CO LTD [JP]) 17. Dezember 2015 (2015-12-17) * Zusammenfassung; Anspruch 1; Abbildung 4 * * Absatz [0003] - Absatz [0006] * * Absatz [0009] - Absatz [0011] * * Absatz [0021] - Absatz [0026] * * Absatz [0035] * ----- | 1,11-13 | RECHERCHIERTE SACHGEBIETE (IPC) F02D G01M F02B |
| A | DE 10 2013 212232 A1 (BOSCH GMBH ROBERT [DE]) 31. Dezember 2014 (2014-12-31) * Zusammenfassung; Ansprüche 1,2; Abbildung 4 * * Absatz [0004] - Absatz [0005] * * Absatz [0022] - Absatz [0025] * ----- | 1,2, 10-13 | |

Der vorliegende Recherchenbericht wurde für alle Patentansprüche erstellt

| Recherchenort | Abschlußdatum der Recherche | Prüfer |
|---|---|---|
| Den Haag | 1. März 2019 | Van der Staay, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 9644

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2019

| Im Recherchenbericht angeführtes Patentdokument | Datum der Veröffentlichung | Mitglied(er) der Patentfamilie | Datum der Veröffentlichung |
|---|---|---|---|
| EP 2690271 A1 | 29-01-2014 | EP 2690271 A1<br>US 2014007664 A1<br>WO 2012127976 A1 | 29-01-2014<br>09-01-2014<br>27-09-2012 |
| DE 102008006569 A1 | 30-07-2009 | DE 102008006569 A1<br>US 2009192733 A1 | 30-07-2009<br>30-07-2009 |
| DE 102015109171 A1 | 17-12-2015 | CN 105275654 A<br>DE 102015109171 A1<br>JP 6011581 B2<br>JP 2016003564 A<br>US 2015361911 A1 | 27-01-2016<br>17-12-2015<br>19-10-2016<br>12-01-2016<br>17-12-2015 |
| DE 102013212232 A1 | 31-12-2014 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19627540 B4
- DE 4118580 A1

- DE 102008044305 A1